Europäisches Patentamt

(19) European Patent Office

Office européen des brevets

(11) Numéro de publication: **0 127 516 B1**

(12) **FASCICULE DE BREVET EUROPEEN**

(51) Int. Cl.⁴: **G 02 B 7/18**, G 11 B 7/12

(45) Date de publication du fascicule du brevet:
**15.07.87**

(21) Numéro de dépôt: **84400986.0**

(22) Date de dépôt: **15.05.84**

(54) **Monture réglable pour miroir pivotant et tête optique d'enregistrement-lecture utilisant une telle monture.**

(30) Priorité: **20.05.83 FR 8308429**

(43) Date de publication de la demande:
**05.12.84 Bulletin 84/49**

(45) Mention de la délivrance du brevet:
**15.07.87 Bulletin 87/29**

(84) Etats contractants désignés:
**DE GB IT NL**

(56) Documents cités:
**DE - A - 3 112 814
GB - A - 1 111 356
GB - A - 2 016 635
US - A - 953 002
US - A - 4 209 804**

(73) Titulaire: **THOMSON-CSF, 173, Boulevard Haussmann,
F-75379 Paris Cedex 08 (FR)**

(72) Inventeur: **Leterme, Dominique, THOMSON-CSF
SCPI 173, bld Haussmann, F-75379 Paris Cedex 08 (FR)**
Inventeur: **Le Merer, Jean-Pierre, THOMSON-CSF
SCPI 173, bld Haussmann, F-75379 Paris Cedex 08 (FR)**

(74) Mandataire: **Weinmiller, Jürgen et al,
Lennéstrasse 9 Postfach 24, D-8133 Feldafing (DE)**

## Description

L'invention se rapporte aux systèmes optiques enregistreurs-lecteurs utilisant comme support d'informations un disque enregistrable et lisible optiquement, une information étant enregistrée sous forme d'une perturbation d'une couche sensible à un rayonnement, par exemple une couche thermosensible. Dans ces systèmes le rayonnement optique est mis en forme par un ensemble dénommé tête optique qui peut comporter: un laser semiconducteur type AsGa, une lentille collimatrice, un ensemble séparateur de polarisation, une lame quart d'onde, un miroir de renvoi pivotant, un objectif de focalisation sur le disque, un ensemble de servomoteurs pour la focalisation sur le disque et pour le suivi de piste et des cellules de photodétection pour identifier les informations lues sur le disque préenregistré ou après emmagasinage d'informations.

Le faisceau lumineux émis par la source laser après réflexion sur le miroir de renvoi est focalisé par l'objectif de focalisation et fournit un spot lumineux sur une piste du support d'informations. Le miroir de renvoi pivote autour d'un pivot de façon à permettre un déplacement du spot transversalement par rapport à la piste. Il est donc possible d'assurer un suivi de la piste par le spot.

Cependant le calage du miroir dans une position optimale pour fournir un faisceau réfléchi dans une direction donnée exige une très grande précision de fabrication pour le pivot du miroir.

Par ailleurs, les dispositifs d'enregistrement-lecture pour disques peuvent avoir leur tête optique montée soit sur un dispositif porte tête, exécutant un mouvement de translation selon un rayon du disque, commandé par moteur, soit à l'extrémité d'un bras dont le centre de pivotement est en dehors de la surface du plateau d'entraînement du disque.

Il est avantageux que la tête ait une forme allongée et soit disposée, selon le cas, le long du dispositif translateur ou dans le prolongement du bras. Dans un cas, la grande dimension de la tête optique est donc transverse par rapport à la piste et dans l'autre cas elle est alignée. Le suivi radial de la piste par le spot à l'aide du miroir pivotant pose donc un problème pour que la même tête puisse être utilisable dans les deux configurations de porte tête.

L'invention vise un montage du miroir dans une tête optique permettant de résoudre ces problèmes et notamment une tête ne nécessitant pas une précision de fabrication particulière du pivot du miroir, compacte, de forme allongée, de réglage simple, adaptable à différents dispositifs d'exploration des pistes (par translation radiale, ou par bras tournant).

L'invention a pour objet une monture réglable pour miroir, comportant un socle en forme de berceau ayant une surface de glissement possédant un centre de courbure, une assise pivotante ayant une surface de glissement de même courbure que la surface précédente et venant se plaquer contre celle-ci, le miroir étant porté par l'assise pivotante de façon que le centre de courbure soit dans le plan réflecteur du miroir.

L'invention sera mieux comprise et d'autres caractéristiques apparaîtront à l'aide de la description qui va suivre et les figures annexées parmi lesquelles:

- la figure 1 représente le schéma explicatif d'une tête optique de type connu;
- la figure 2 représente le schéma explicatif d'un exemple de réalisation de la monture réglable selon l'invention dans lequel l'assise supportant le miroir a une forme cylindrique;
- les figures 3 à 6 représentent les schémas explicatifs d'exemples de réalisation de la monture réglable selon l'invention dans lequel l'assise supportant le miroir a une forme sphérique;
- les figures 7 et 8, les schémas explicatifs d'utilisations de la monture réglable selon l'invention dans un dispositif d'exploration à translation radiale;
- les figures 9 et 10, les schémas explicatifs d'utilisation de la monture réglable selon l'invention dans un dispositif d'exploration à bras tournant;
- la figure 11 illustre un exemple de réalisation d'une tête optique selon l'invention;
- la figure 12 illustre en perspective un exemple de réalisation d'une tête optique selon l'invention.

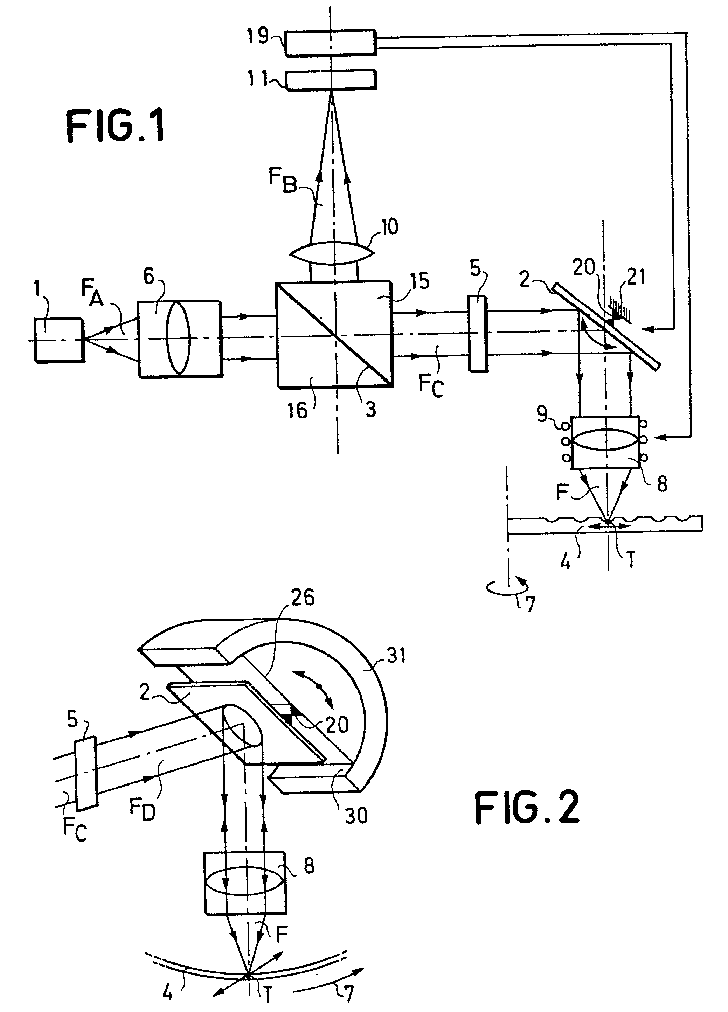

La figure 1 représente un dispositif de l'art connu.

Sur cette figure, une source laser 1 émet un faisceau divergent $F_A$ polarisé linéairement. Une lentille collimatrice 6 reçoit ce faisceau $F_A$ et transmet un faisceau de rayons parallèles vers un dispositif 15–16 de séparation de faisceau par polarisation. Ce dispositif 15–16, qui comporte deux prismes 15 et 16, possède une interface 3 traitée de façon d'une part à réfléchir la lumière polarisée dans un plan perpendiculaire au plan d'incidence et, d'autre part, à transmettre, sous forme d'un faisceau $F_C$, la lumière polarisée dans le plan d'incidence. Une lame quart d'onde 5 transforme le faisceau $F_C$ à polarisation rectiligne en faisceau à polarisation circulaire gauche ou droite. Un miroir pivotant 2 réfléchit le faisceau émis par la lame 5 vers un objectif 8 qui focalise le faisceau F en un point T du support d'informations 4.

Selon le type d'information se trouvant au point T, le faisceau F est susceptible d'être réfléchi vers l'objectif 8 sous forme d'un faisceau à polarisation circulaire. Le miroir 2 réfléchit la lumière vers la lame quart d'onde 5 qui transforme le faisceau à polarisation circulaire en un faisceau à polarisation rectiligne croisée en direction du dispositif 15–16. L'interface 3 reçoit un faisceau dont le plan de polarisation est cette fois-ci perpendiculaire au plan d'incidence de la lumière. La face 3 réfléchit ce faisceau vers une lentille convergente 10 qui fournit un faisceau focalisé $F_B$ sur un dispositif photodétecteur constitué de cellules de photodétection 11.

Il apparaît donc que selon la nature du point T du support d'information, un faisceau réfléchi peut être détecté par les cellules de photodétection 11. Le support d'information 4 étant un disque animé d'un mouvement de rotation 7, les informations peuvent être disposées sous forme de pistes circulaires concentriques ou de spires. La rotation du disque selon la flèche 7 permet le défilement des informations sous l'objectif 8 de la tête optique ce qui permet l'enregistrement ou la lecture d'informations.

Le miroir 2 pivote autour d'un pivot 20 solidaire d'un support fixe 21. Il peut basculer selon un sens indiqué par la double flèche dessinée à proximité du pivot. Un tel basculement du miroir a pour effet de déplacer le point de focalisation du faisceau F sur le support d'information selon la double flèche dessinée à proximité du point T. Il est donc possible en orientant convenablement le miroir 2 de déplacer, à l'aide d'un moteur non représenté, le point de focalisation sur le support d'information 4 de façon qu'il tombe toujours sur une piste d'éléments d'information. On obtient ainsi un suivi de la piste par le faisceau F.

Un dispositif de commande d'asservissement 19 est en outre prévu pour commander, en fonction des résultats de la détection faite par les cellules 11 d'une part, une focalisation correcte de l'objectif 8 et, d'autre part, une orientation du miroir 2.

Un tel système pose des problèmes de fabrication en ce qui concerne la mise en place de façon aussi précise que possible du miroir 2, du pivot 20 et du support 21 compte-tenu du fait que l'erreur d'orientation du miroir 2 qui résulte de son pivot 20 doit être aussi faible que possible. Une telle erreur d'orientation se produit lorsque le pivot 20 du suivi est constitué par un profil à étranglement réalisé dans un matériau élastomère.

En se reportant à la figure 2, on va donc décrire un schéma explicatif d'un exemple de réalisation de la monture réglable selon l'invention.

Sur cette figure on retrouve la lame quart d'onde 5, le miroir 2 avec son pivot 20, l'objectif 8, le support d'information 4 représenté sous forme d'une piste se déplaçant selon le sens indiqué par la flèche 7, le point d'information T.

Selon l'invention, le pivot 20 est fixé sur une assise pivotante 26 ayant une face de glissement cylindrique reposant sur une autre surface cylindrique 30 de même courbure appartenant à un socle 31 en forme de berceau.

La pièce 26 peut osciller à l'intérieur de la surface cylindrique 30 selon un mouvement de rotation indiqué par la double flèche indiquée sur la pièce 26.

Le miroir 2 et son pivot 20 sont fixés sur l'assise pivotante 26 de telle façon que l'axe des surfaces cylindriques soit confondu avec le plan réflecteur du miroir 2. Par ailleurs, le pivot 20 est parallèle à l'axe autour duquel pivote l'assise pivotante 26.

Dans ces conditions, lors du réglage de la position du miroir 2 pour corriger une déviation angulaire de l'axe du faisceau F par rapport au plan du support d'information 4, il suffira d'orienter convenablement la pièce 26, le miroir 2 étant dans une position médiane par rapport à son pivot 20. L'assise pivotante 26 sera ensuite immobilisée dans le socle 31. Le suivi de piste se fera par l'articulation du miroir 2 autour du pivot 20 comme décrit précédemment.

L'avantage de cette disposition est de corriger angulairement l'erreur d'orientation du miroir sans que les conditions de renvoi du rayon axial du faisceau $F_D$ soient modifiées à l'écart angulaire près. Il est donc possible d'obtenir une position d'équilibre correcte du miroir en obtenant un éclairement centré de la pupille de l'objectif 8.

Selon une variante de réalisation de l'invention, les surfaces de glissement sont avantageusement sphériques.

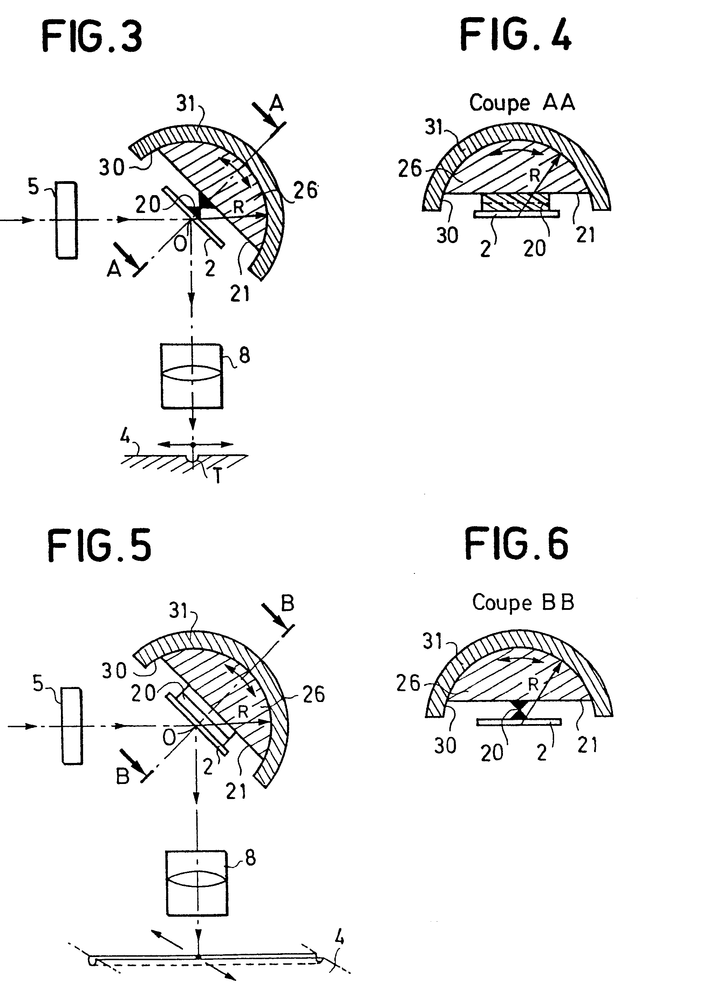

Les figures 3 et 4 représentent les schémas explicatifs d'un exemple de réalisation du système d'orientation selon l'invention dans lequel la surface de glissement de l'assise pivotante 26 est sphérique.

Sur la figure 3, on retrouve la lame quart d'onde 5, le miroir 2, le pivot 21, l'assise pivotante 26, la surface 20 du socle 31, l'objectif 8 et le support d'informations 4.

La figure 4, représentant une coupe AA de la figure 3, fait apparaître que la surface de glissement de l'assise pivotante 26 est une calotte sphérique de rayon R. Elle est logée dans une cavité sphérique de même rayon R du socle 31. Elle peut pivoter dans la cavité dans deux directions et tourner également selon un axe radial par glissement des surfaces sphériques. Le miroir 2 et son pivot 20 sont montés sur la face plane de l'assise 26 avec le centre O de la surface sphérique 30 du socle 31 situé dans le plan réfléchissant du miroir 2.

L'utilisation d'un système d'orientation sphérique présente l'avantage de permettre le réglage de la position d'un miroir qui serait articulé selon plusieurs axes d'articulation tout en conservant le centre du miroir dans l'axe du système optique de l'invention.

Par ailleurs, les formes sphériques de l'assise pivotante 26 et de la surface 30 permettent d'orienter le pivot 20 selon toute direction désirée tout en permettant un balayage transversal de la piste du support d'informations.

Sur la figure 3, on considère le rayon lumineux situé selon l'axe du faisceau incident et représenté par un trait mixte. Le plan d'incidence de ce rayon sur le support d'informations est perpendiculaire aux pistes. Lorsqu'on fait basculer le miroir 2 autour de son pivot 20, le spot se déplace perpendiculairement à la piste. On réalise donc le suivi de la piste par le spot.

Sur la figure 5, le plan d'incidence du même rayon lumineux sur le support d'informations est parallèle à la piste. Pour assurer le même suivi de la piste et donc pour déplacer le spot perpendiculairement à la piste, le pivot 20 a été tourné de 90° par rapport à sa position de la figure 3. Cette opération a été rendue possible par la rotation de l'assise pivotante 26.

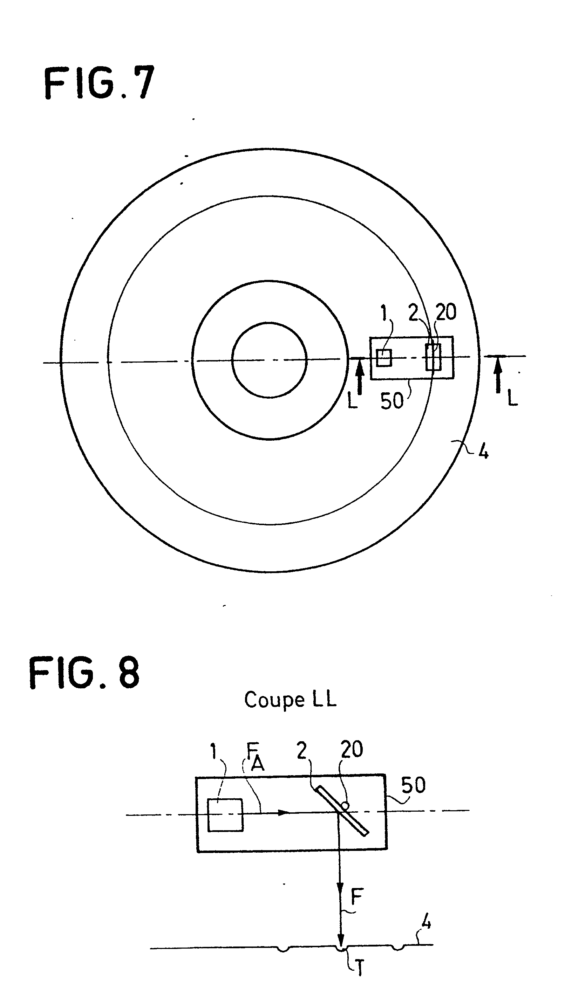

La monture selon l'invention trouve différentes applications telles que celles décrites en relation avec les figures 7 à 10.

Sur les figures 7 et 8, la tête optique selon l'invention est utilisée en liaison avec un porte tête à translation radiale par rapport au disque commandée par un moteur linéaire par exemple. Sur la figure 7, la grande dimension de la tête optique est disposée selon un rayon du disque. Le plan d'incidence de l'axe du faisceau mentionné dans la description de la figure 3 est perpendiculaire aux pistes du disque 4. Le pivot 20 est contenu dans un plan tangent à la piste à lire. Sur la figure 8, on voit donc que le pivotement du miroir autour du pivot 20 permet d'assurer le suivi de la piste.

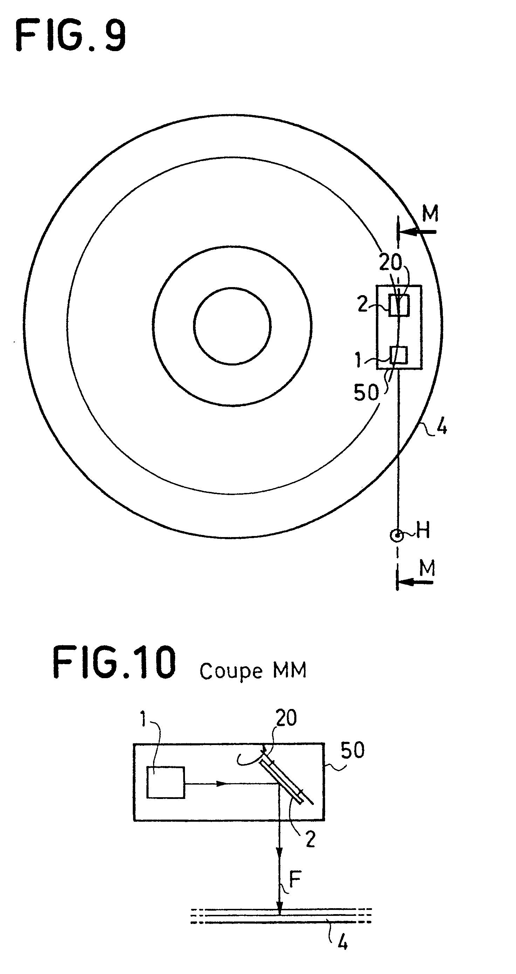

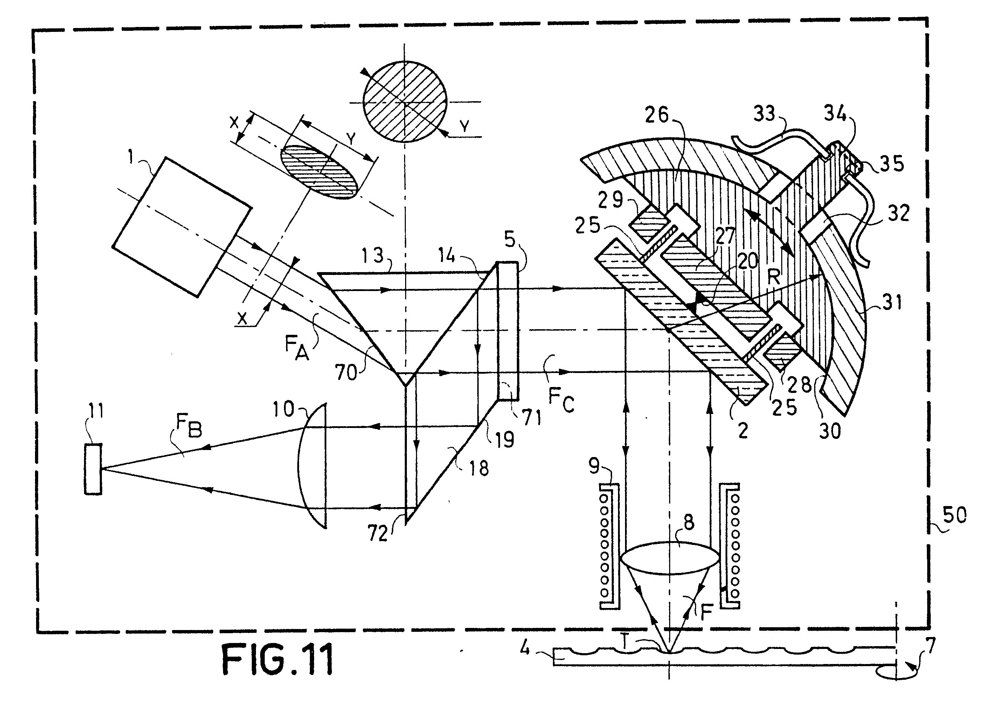

Les figures 9 et 10 représentent la même tête optique que celle des figures 7 et 8. Elle est ici utilisée avec un dispositif d'entraînement constitué par un bras tournant pivotant autour d'un axe H situé en dehors du plateau d'entraînement du disque. Le plan d'incidence de l'axe du faisceau est sensiblement tangent aux pistes du disque 4. Le pivot 20 est contenu dans un plan sensiblement tangent à ces pistes. On voit donc que la rotation du miroir 2 autour du pivot 20 provoque un déplacement du spot transversalement par rapport aux pistes et assure un suivi de la piste.

On passe de la version des figures 7 et 8 à la version des figures 9 et 10 par rotation de 90° de l'assise du miroir 2 dans le socle en forme de berceau de sorte que la tête optique est universelle.

La figure 11 représente un exemple de réalisation de la tête optique selon l'invention, intégrant une monture réglable telle que décrite précédemment.

Une source laser à semiconducteur émet un faisceau lumineux $F_A$ de section elliptique de dimensions X et Y selon respectivement le petit axe et le grand axe. Ce faisceau est reçu sur une facette d'entrée 70 d'un bloc optique réfringent comprenant un prisme triangulaire 13, un prisme quadrangulaire 18 qui pourra être un parallélépipède droit et une lame quart d'onde 5. Le prisme 13 reçoit le faisceau $F_A$ obliquement sur sa facette 70. Celle-ci est convenablement inclinée par rapport au faisceau $F_A$ de façon à ce que le prisme joue le rôle d'anamorphoseur et fournisse un faisceau de section circulaire de diamètre Y. De plus, la facette 14 du prisme 13, commune avec le parallélépipède 18, convenablement traitée, remplit le rôle de séparateur de faisceau par polarisation. La lumière dont la polarisation est perpendiculaire au plan d'incidence est réfléchie selon une direction non représentée sur la figure 11. Par contre, la lumière polarisée dans le plan d'incidence est transmise, traverse le parallélépipède 18 vers la facette 71 qu'on appellera facette d'échange. Une lame quart d'onde 5 transforme la lumière à polarisation rectiligne en lumière à polarisation circulaire. Le faisceau résultant $F_C$ se réfléchit sur le miroir 2, vers un objectif 8 qui le focalise au point T sur le disque 4.

Selon l'information située au point T, le faisceau est réfléchi vers l'objectif 8, le miroir 2, la lame quart d'onde 5. Celle-ci transforme la lumière à polarisation circulaire en lumière à polarisation rectiligne dans un plan perpendiculaire au plan d'incidence. Le faisceau est transmis à la facette d'échange 71 du parallélépipède 18. La facette 14 du prisme 13 réfléchit le faisceau vers la facette 19 du parallélépipède 18 qui le réfléchit à son tour vers la facette de sortie 72. Une lentille convergente 10 focalise le faisceau sur un photodétecteur 11 qui mesure finalement la quantité de lumière reçue et sa répartition.

On retrouve dans cette tête, l'assise pivotante sphérique 26 supportant le miroir 2 et le pivot 20. L'assise pivotante 26 est logée dans une cavité sphérique 30 de rayon R d'un socle 31. Le miroir 2 et le pivot 20 sont fixés sur la face plane de l'assise 26 avec le centre O des surfaces sphériques situé dans le plans réfléchissant du miroir 2.

Le socle 31 possède une ouverture 32 permettant le passage et le déplacement d'un maneton 34 solidaire de l'assise 26. Un ressort 33 s'engageant dans des encoches 35 du maneton assure le placage de l'assise 26 contre la paroi intérieure de la cavité 30. Le maneton 34 permet en outre la manipulation de l'assise 26 lors du réglage de la position du miroir.

Par ailleurs, on remarque l'utilisation d'un dioptre parallélépipédique 18 qui, associé de façon simple, donc sans réglage au prisme 13, permet le renvoi du faisceau provenant du disque 4, dans une direction sensiblement parallèle au faisceau $F_A$ émis par la source laser 1. Cette disposition présente l'intérêt de rendre la tête plus compacte.

Enfin un dispositif d'asservissement, non représenté sur la figure, fonctionnant sous la commande du photodétecteur 11 en fonction du centrage et de la focalisation du faisceau sur le photodétecteur 11, permet de commander un dispositif 9 de focalisation de l'objectif 8 et l'orientation du miroir 2. Le dispositif de commande du miroir 2 est représenté par un dispositf magnétique comportant un cadre mobile 25 fixé au miroir 2 et trois blocs de ferrite 27, 28, 29 solidaires de l'assise 26 et situés de part et d'autre du bobinage 25. Le passage d'un courant dans le cadre mobile permet de faire tourner le miroir 2 par rapport à son pivot 20.

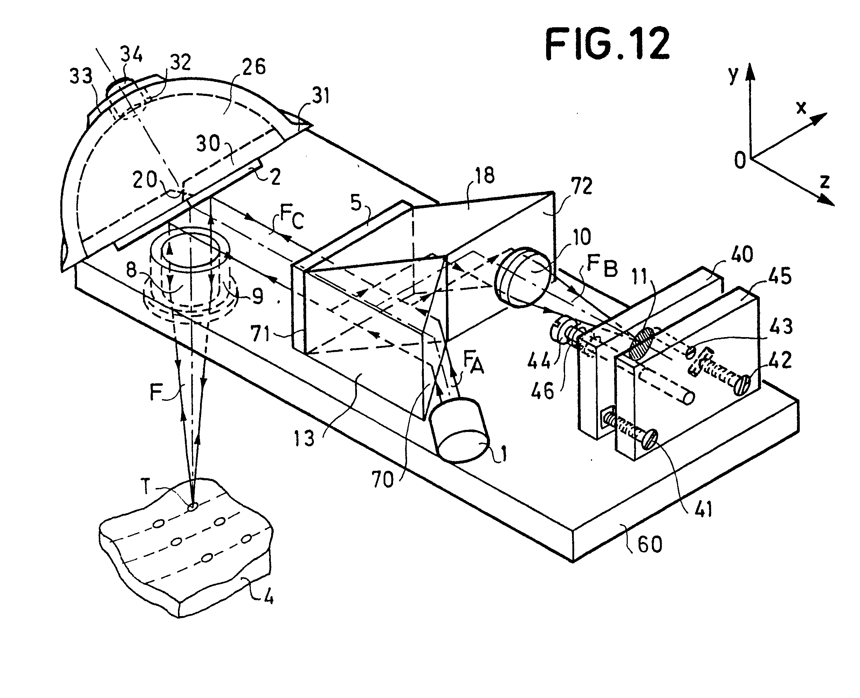

La tête optique représentée par la figure 12 donne une disposition des éléments de la tête telle que celle-ci ait une forme allongée et compacte.

La tête optique possède un bâti 60 de forme allongée disposée dans un plan xOz et dont la grande dimension est orientée selon un axe Oz. Sur le bâti 60 sont disposés selon l'axe Oz successivement la source 1 et le photodétecteur 11, puis l'ensemble prisme 13-parallélépipède 18, et enfin le miroir pivotant 2 sur sa monture réglable et l'objectif 8.

De plus, la source 1, l'ensemble prisme 13-parallélépipède 18, l'objectif 10, le photodétecteur 11 sont disposés dans le plan xOz parallèle au plan du disque 4. Le prisme 13 et le parallélépipède 18 ont alors leur base dans ce plan.

La figure 12 illustre également une disposition de montage du photodétecteur permettant un réglage angulaire et en position de focalisation des cellules de photodétection.

Une pièce fixe 45 est montée sur le bâti 60 de la tête. Trois vis à bout conique 41, 42, 43 sont vissées dans la pièce 45 et émergent de l'autre côté de la pièce 45. Une pièce mobile 40 est montée contre les pointes des vis 41, 42, 43 et est gardée en appui contre ces pointes, selon la technique connue point-trait-plan, par une vis 44 vissée dans la pièce 45 et par un ressort 46. Les cellules de détection 11 sont fixées sur la pièce mobile 40, sur la face visible à partir de l'objectif 10, sensiblement au point de focalisation de l'objectif 10. L'action sur les vis 41, 42, 43 permet d'obtenir aisément le réglage de la position des cellules de détection 11.

Le fonctionnement optique de cette tête est le même que celui décrit en liaison avec la figure 11. Par contre, sur la figure 12, les avantages de simplicité de construction, de compacité et de forme générale allongée de la tête ainsi que de simplicité de réglage apparaissent mieux.

Une autre variante de l'invention pourrait consister dans une disposition du bâti 60 selon un plan yOz perpendiculaire aux pistes du disque. On obtiendrait un montage équivalent à celui de la figure 11. Il conviendrait alors de prévoir des dispositifs de fixation des divers éléments de la tête sur le bâti 60.

**Revendications:**

1. Monture réglable pour miroir pivotant caractérisée en ce qu'elle comporte un socle en forme de berceau (31) ayant une surface de glissement (30) de centre de courbure O, une assiste pivotante (26) ayant une surface de glissement de même courbure que la surface précédente (30) et venant se plaquer contre celle-ci, le miroir (2) étant porté par l'assise pivotante (26) de façon que le centre de courbure (O) soit dans le plan réflecteur du miroir (2).

2. Monture réglable pour miroir selon la revendication 1, caractérisée en ce que les surfaces de glissement sont des cylindres coaxiaux et de même rayon, l'axe des cylindres étant dans le plan réflecteur du miroir (2).

3. Monture réglable pour miroir selon la revendication 1, caractérisée en ce que les surfaces de glissement sont des portions de sphères coaxiales et de même rayon (R), le centre (O) des sphères étant dans le plan réflecteur (2) du miroir.

4. Monture réglable pour miroir selon la revendication 1, caractérisée en ce que l'assise pivotante (26) possède un maneton (34), que le socle (31) possède une ouverture (32) permettant le passage et un déplacement du maneton (34) et que des moyens élastiques (33) agissent sur le maneton (34) et le socle (31) afin de plaquer l'assise pivotante (26) contre la surface de glissement (30).

5. Tête optique comportant une source lumineuse (1), un bloc optique réfringent séparateur de faisceau par polarisation (13–18), un miroir pivotant (2), un objectif de focalisation (8), et des moyens photodétecteurs (11), caractérisée en ce que le miroir pivotant (2) est disposé sur une monture réglable selon l'une des revendications précédentes et en ce que la tête comporte un bâti (60) de forme allongée divisée en trois zones dans le sens de sa plus grande dimension, deux zones d'extrémités et une zone médiane, la source lumineuse (1) et les moyens photodétecteurs (11) étant disposés dans l'une des zones d'extrémité du bâti, le bloc optique réfringent (13–18) étant disposé dans la zone médiane, le miroir pivotant (2) et sa monture réglable ainsi que l'objectif de focalisation (8) étant disposés dans l'autre zone d'extrémité.

6. Tête optique selon la revendication 5, caractérisée en ce que le bloc optique réfringent (13–18) comporte une facette d'entrée (70) orientée vers la source (1) et recevant le faisceau lumineux émis par la source (1), une facette d'échange (71) orientée vers le miroir (2) recevant d'une part le faisceau transmis par la facette d'entrée (70) et le transmettant au miroir (2) et une facette de sortie (72) orientée vers les photodétecteurs (11) recevant le faisceau provenant du miroir (2) par l'intermédiaire de la facette d'échange (71) et le transmettant aux moyens photodétecteurs (11).

7. Tête optique selon la revendication 6, caractérisée en ce que le bloc optique réfringent (13–18) comporte un prisme à base triangulaire (13), un prisme à base quadrangulaire (18) avant une face commune (14) avec le prisme triangulaire, la facette d'échange (71) et la facette de sortie (72) étant deux faces libres et opposées du prisme à base quadrangulaire, la facette d'entrée (70) étant la face libre du prisme triangulaire (13) formant un dièdre avec la facette de sortie (72).

8. Tête optique selon la revendication 7, caractérisée en ce que le prisme triangulaire et le prisme quadrangulaire reposent sur une face (xOz) du bâti (60) par leur base; la source (1) étant agencée pour émettre un faisceau également parallèle à la face (xOz) du bâti (60), l'objectif de focalisation (8) ayant son axe optique perpendiculaire à la face (xOz) du bâti (60).

9. Tête optique selon la revendication 8, caractérisée par le fait que les moyens photodétecteurs comportent des cellules de détection (11) placées sur une plate-forme (40) munie de moyens de réglage en profondeur (41, 42, 43) et en inclinaison par rapport à la direction du faisceau incident.

**Patentansprüche**

1. Einstellbare Halterung für einen schwenkbaren Spiegel, dadurch gekennzeichnet, dass sie einen gewölbten Sockel (31) mit einer Gleitoberfläche (30) eines Krümmungszentrums O und eine schwenkbare Grundplatte (26) aufweist, deren Gleitoberfläche die gleiche Krümmung aufweist wie die vorhergehende (30) und sich an diese anlegt, wobei der Spiegel (2) von der schwenkbaren Grundplatte (26) so gehalten wird, dass das Krümmungszentrum (O) sich in der Reflexionsebene des Spiegels (2) befindet.

2. Einstellbare Spiegelhalterung nach Anspruch 1, dadurch gekennzeichnet, dass die Gleitoberflächen koaxiale Zylinder gleichen Halbmessers sind, wobei die Achse der Zylinder sich in der Reflexionsebene des Spiegels (2) befindet.

3. Einstellbare Spiegelhalterung nach Anspruch 1, dadurch gekennzeichnet, dass die Gleitoberflächen koaxiale Kugelabschnitte gleichen Halbmessers (R) sind, wobei das Zentrum (O) der Kugeln sich in der Reflexionsebene (2) des Spiegels befindet.

4. Einstellbare Spiegelhalterung nach Anspruch 1, dadurch gekennzeichnet, dass die schwenkbare Grundplatte (26) einen Zapfen (34) aufweist, dass der Sockel (31) eine Öffnung (32) aufweist, die das Einführen und eine Verschiebung des Zapfens (34) ermöglicht und dass elastische Mittel (33) auf den Zapfen (34) und den Sockel (31) einwirken, um die schwenkbare Grundplatte (26) an die Gleitoberfläche (30) anzulegen.

5. Optischer Kopf mit einer Lichtquelle (1), einem lichtbrechenden optischen Block, der Lichtbündel durch Polarisation trennt (13–18), einem schwenkbaren Spiegel (2), einem Fokalisationsobjektiv (8) und Lichtdetektormitteln (11), dadurch gekennzeichnet, dass der schwenkbare Spiegel (2) auf einer einstellbaren Halterung gemäss einem der vorhergehenden Ansprüche angeordnet ist und dass der Kopf ein Gerüst (60) länglicher Form aufweist, das in drei Bereiche in Richtung seiner grössten Ausdehnung aufgeteilt ist, nämlich zwei Endbereiche und einen Mittelbereich, wobei die Lichtquelle (1) und die Lichtdetektormittel (11) in einem der Endbereiche des Gerüsts angeordnet sind, während der optische lichtbrechende Block (13–18) im Mittelbereich angeordnet ist und der schwenkbare Spiegel (2) und seine einstellbare Halterung sowie das Fokalisationsobjektiv (8) sich in dem anderen Endbereich befinden.

6. Optischer Kopf nach Anspruch 5, dadurch gekennzeichnet, dass der optische lichtbrechende Block (13–18) eine Eingangsfacette (70), die zur Quelle (1) hinweist und das von der Quelle (1) ausgesandte Lichtbündel empfängt, eine Austauschfacette (71), die zum Spiegel (2) hinweist und einerseits das von der Eingangsfacette (70) kommende Bündel empfängt und es zum Spiegel (2) überträgt, und eine Ausgangsfacette (72) aufweist, die zu den Lichtdetektoren (11) hinweist und das vom Spiegel (2) kommende Bündel über die Austauschfacette (71) empfängt und es zu den Lichtdetektormitteln (11) überträgt.

7. Optischer Kopf nach Anspruch 6, dadurch gekennzeichnet, dass der lichtbrechende optische Block (13–18) ein Prisma mit dreieckiger Basis (13) und ein Prisma mit viereckiger Basis (18) aufweist, das eine gemeinsame Seite (14) mit dem dreieckigen Prisma aufweist, wobei die Austauschfacette (71) und die Ausgangsfacette (72) zwei freie und einander entgegengesetzte Seiten des Prismas mit viereckiger Basis sind und die Eingangsfacette (70) die freie Seite des dreieckigen Prismas (13) ist, die mit der Ausgangsfacette (72) einen Dieder bildet.

8. Optischer Kopf nach Anspruch 7, dadurch gekennzeichnet, dass das dreieckige Prisma und das viereckige Prisma auf einer Seite (xOz) des Gerüsts (60) mit ihrer Basis aufliegen, wobei die Quelle (1) so eingerichtet ist, dass sie ein ebenfalls zur Seite (xOz) des Gerüsts (60) paralleles Bündel aussendet, während die optische Achse des Fokalisationsobjektivs (8) senkrecht zur Seite (xOz) des Gerüsts (60) liegt.

9. Optischer Kopf nach Anspruch 8, dadurch gekennzeichnet, dass die Lichtdetektormittel Detektorzellen (11) aufweisen, die auf einer Platte (40) angeordnet sind, welche mit Tiefen- und Neigungseinstellungsmitteln (41, 42, 43) in bezug auf die Richtung des einfallenden Bündels ausgerüstet ist.

## Claims

1. An adjustable mount for a pivoting mirror, characterized in that it comprises a cot-shaped base (31) having a slide surface (30) with a center (O) of curvature, and a pivoting seat (26) having a slide surface of the same curvature as the preceding surface (30) and being applied against the latter, the mirror (2) being supported by the pivoting seat (26) such that the center of curvature (O) is situated in the reflector plane of the mirror (2).

2. An adjustable mount for a mirror according to claim 1, characterized in that the slide surfaces are coaxial cylinders of even radii, the axis of the cylinders being situated in the reflector plane of the mirror (2).

3. An adjustable mount for a mirror according to claim 1, characterized in that the slide surfaces are portions of coaxial spheres of even radii (R), the center (O) of the spheres being situated in the reflector plane (2) of the mirror.

4. An adjustable mount for a mirror according to claim 1, charaterized in that the pivoting seat (26) is provided with a tenon (34), that the base (31) is provided with an opening (32) allowing the tenon (34) to pass therethrough and to be displaced, and that resilient means (33) act on the tenon (34) and the base (31) in order to urge the pivoting seat (26) against the slide surface (30).

5. An optical head comprising a light source (1), a refringent optical block for separating the light bundle by polarisation (13–18), a pivoting mirror (2), a focalisation lens (8) and photodetector means (11), characterized in that the pivoting mirror (2) is disposed on an adjustable mount according to one of the preceding claims and that the head comprises a chassis (60) of elongated shape which is subdivided into three zones along its direction of main extension, two end zones and a middle zone, the light source (1) and the photodetector means (11) being disposed in one of the end zones of the chassis, the refringent optical block (13–18) being disposed in the middle zone, the pivoting mirror (2) and its adjustable mount as well as the focalisation lens (8) being disposed in the other end zone.

6. An optical head according to claim 5, characterized in that the refringent optical block (13–18) comprises an input facet (70) facing the source (1) and receiving the light bundle emitted by the source (1), an exchange facet (71) facing the mirror (2) and receiving on the one hand the light bundle transmitted by the input facet (70) and transmitting it to the mirror (2), and an output facet (72) facing the photodetectors (11) and receiving the bundle from the mirror (2) via the exchange facet (71) and transmitting it to the photodetector means (11).

7. An optical head according to claim 6, characterized in that the refringent optical block (13–18) comprises a prism with triangular basis (13), a prism with quadrangular basis (18) having a common surface (14) with the triangular prism, the exchange facet (71) and the output facet (72) being two free and opposite surfaces of the prism having a quadrangular basis, the input facet (70) being the free surface of the triangular prism (13) and constituting a dihedron with the output facet (72).

8. An optical head according to claim 7, characterized in that the triangular prism and the quadrangular prism rest via their bases on a surface (xOz) of the chassis (60), the source (1) being arranged for emitting a bundle which is also parallel to the surface (xOz) of the chassis (60), the optical axis of the focalisation lens (8) being perpendicular to the surface (xOz) of the chassis (60).

9. An optical head according to claim 8, characterized in that the photodetector means comprise detection cells (11) placed on a plate (40) which is provided with depth and inclination adjusting means (41, 42, 43) with respect to the direction of the incident bundle.

0127516

FIG.1

FIG.2

9

0127516

FIG.3

FIG.4

Coupe AA

FIG.5

FIG.6

Coupe BB

11

# FIG.7

# FIG.8

Coupe LL

# FIG.9

# FIG.10 Coupe MM

FIG.11

FIG.12